# EUROPEAN PATENT APPLICATION

(11) **EP 2 887 216 A1**
(43) Date of publication of application: **24.06.2015**
(21) Application number: 14196259.7
(22) Date of filing: 04.12.2014
(51) Int. Cl.: G06F 9/445

(54) **Firmware update of an electric product communicating wirelessly with a firmware update supplying terminal**

(30) Priority: 19.12.2013 KR 20130159673
(71) Applicant: LG Electronics, Inc., Youngdungpo-gu Seoul 150-721 (KR)
(72) Inventor: Kim, Minuk, 153-802 Seoul (KR); Lee, Sunghun, 153-802 Seoul (KR); Yi, Donghoon, 153-802 Seoul (KR)
(74) Representative: Vossius & Partner Patentanwälte Rechtsanwälte mbB

(57) **Abstract**

An electronic product communicating with a terminal includes: a wireless communication unit equipped in the electronic product; a firmware storage unit storing a firmware file for update received from the terminal; a firmware modulation and confirmation unit determining whether the firmware file for update received from the terminal is normal; and a firmware update execution unit executing an update of firmware received from the terminal, wherein while the electronic product is registered to the terminal, the electronic product receives the firmware file for update from the terminal.

## Description

### BACKGROUND

The present disclosure relates to an electronic product.

The electronic product is driven by firmware stored in a memory to perform an original function. Additionally, the firmware of the electronic product may be updated to improve the performance or an additional function.

### SUMMARY

Embodiments provide an electronic product.

In one embodiment, an electronic product communicating with a terminal includes: a wireless communication unit equipped in the electronic product; a firmware storage unit to store a firmware file for update received from the terminal; a firmware modulation and confirmation unit to determine whether the received firmware file for update received from the terminal is normal; and a firmware update execution unit to execute an update of firmware received from the terminal, wherein while the electronic product is registered to the terminal, the electronic product receives the firmware file for update from the terminal.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating a configuration of a network according to an embodiment of the present invention.
Fig. 2 is a block diagram illustrating an electronic product and a terminal configuring a network device according to an embodiment of the present invention.
Fig. 3 is view illustrating an initial registration process of an electronic product and a terminal according to an embodiment of the present invention.
Fig. 4 is a flowchart illustrating a method of updating the firmware of an electronic product according to an embodiment of the present invention.
Fig. 5 is a block diagram illustrating an electronic product and a terminal configuring a network device according to another embodiment of the present invention.
Fig. 6 is a flowchart illustrating a method of updating the firmware of an electronic product according to another embodiment of the present invention.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

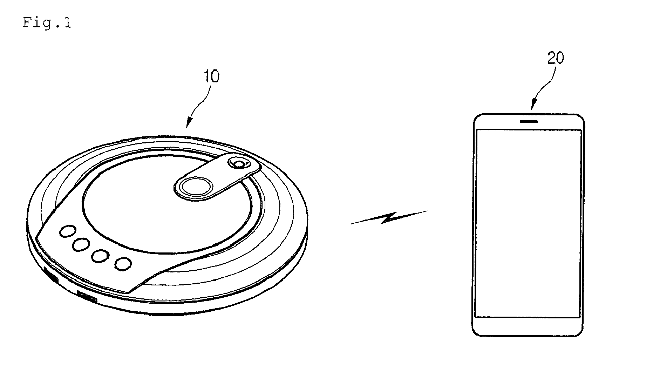

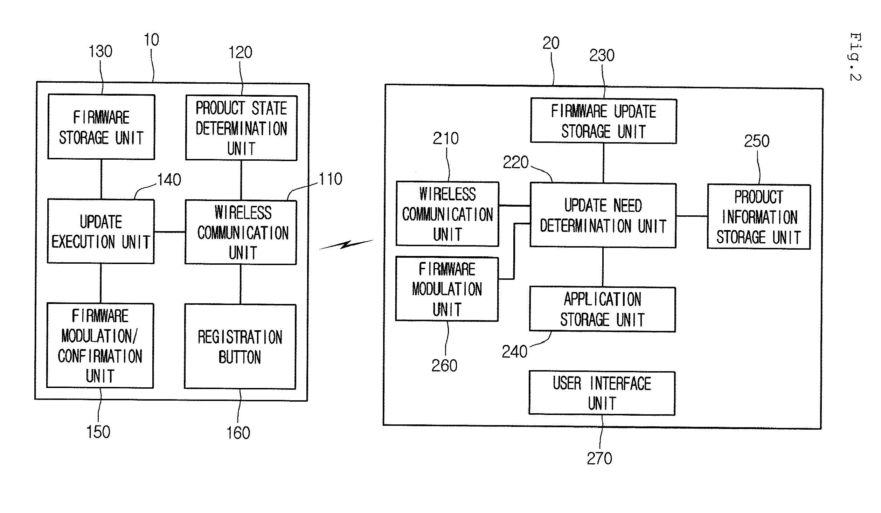

Fig. 1 is a view illustrating a configuration of a network device according to an embodiment of the present invention. Fig. 2 is a block diagram of an electronic product and a terminal configuring a network according to an embodiment of the present invention.

Referring to Figs. 1 and 2, the network device includes an electronic product 10 and a terminal 20 directly communicating with the electronic product 10.

The electronic product 10 may be any product driven by firmware and in this embodiment, a robot cleaner cleaning the floor while moving automatically is described.

The electronic product 10 includes a wireless communication unit 110 as a Wi-Fi available communication module, a product state determination unit 120 determining a state of a product, a firmware storage unit 130 storing firmware, a firmware modulation and confirmation unit 150 modulating firmware received from the terminal 20 and confirming whether the firmware is normal, an update execution unit 140 receiving the terminal 20 to execute the update of the firmware stored in the firmware storage unit 130, and a registration button 160 registering a product to the terminal 20.

The wireless communication unit 110 may operate in one of a security access point (AP) mode and a registration AP mode. That is, the wireless communication unit 100 may serve as a wireless router and accordingly, without an additional wireless router, a direction communication of the electronic product 10 and the terminal 10 may be possible.

The security AP mode is a mode with an encrypted first service set identifier (SSID).

On the other hand, the registration AP mode is a mode having non-encrypted second SSID information.

The registration button 160 may be equipped at an outer one side of the electronic product 10 and in order to register the electronic product 10 to the terminal 20, a user may press the registration button 160 for a predetermined time.

Then, when the registration button 160 is pressed for a predetermined time, the wireless communication unit 110 switches the security AP mode into the registration AP mode.

Although not shown in the drawing, the electronic product 10 may further include a battery.

The product state determination unit 120 may determine whether the battery is charged and the charge amount of the battery.

Moreover, the terminal 20 may be a smartphone as a portable terminal but is not limited thereto.

The terminal 20 may include a wireless communication unit 210 communicating with the wireless communication unit 110 via Wi-Fi, a firmware update storage unit 230 storing firmware update, an update need determination unit 220 determining whether the update of firmware is needed, an application storage unit 240 storing application, a product information storage unit 250 storing information for registration received from the electronic product 10, a firmware modulation unit 260, and a user interface unit 270.

The terminal 20 may communicate with a web server managing the firmware update of the electronic product 10 to receive firmware used therein and may then store the firmware in the firmware update storage unit 230.

Then, the update need determination unit 220 may determine whether the firmware update of the electronic product 10 is necessary and whether the firmware update is available.

The application storage unit 240 stores an application for connecting to the electronic product 10 and the second SSID information.

In this embodiment, the application storage unit 240, the firmware update storage unit 230, and the product information storage unit 250 may be separate storage units or one storage unit separated by function.

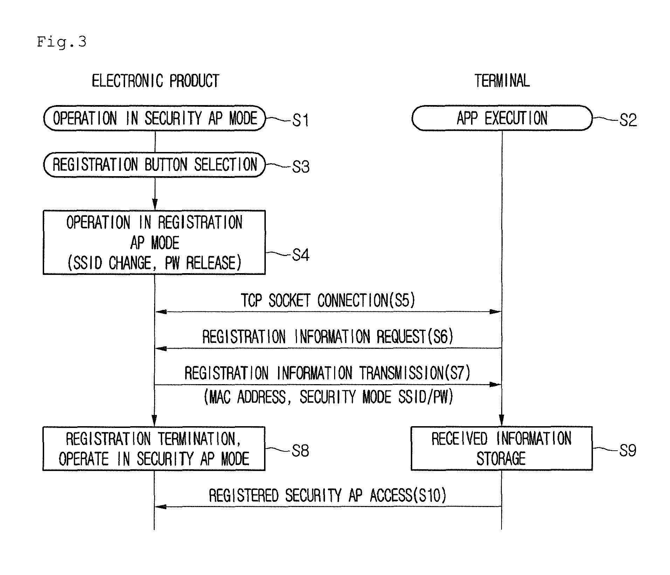

Fig. 3 is view illustrating an initial registration process of an electronic product and a terminal according to an embodiment of the present invention.

Referring to Fig. 3, until the registration button 160 of the electronic product 10 is selected, the wireless communication unit 110 operations in a security AP mode in operation S1. Then, an application is executed in the terminal through the user interface unit 270 in operation S2.

For the registration of the electronic product 10, the registration button 160 of the electronic product 10 may be pressed for a predetermined time in operation S3. That is, by selecting the registration button 160, a registration command is inputted.

Once the registration command is inputted, the wireless communication unit 110 switches the security AP mode into the registration AP mode in operation S4. That is, the first SSID of the wireless communication unit switches into the second SSID and its password is released.

Since the terminal 20 knows the information on second SSID already, the wireless communication unit 210 of the terminal 20 makes an access the second SSID of the wireless communication unit 110 of the electronic product 10 in operation S5.

Then, the terminal 20 requests information for registration to the electronic product 10 in operation S6. Then, the electronic product 10 transmits information for registration to the terminal 20 in operation S7.

At this point, the information for registration may include product specific information (product serial number), MAC address, first SSID, and the password of the first SSID.

After the electronic product 10 transmits the information for registration to the terminal 20, the wireless communication unit 110 of the electronic product 10 switches the registration AP mode into the security AP mode again in operation S8.

Then, the terminal 20 stores the received information for registration in the product information storage unit 250 in operation S9.

Then, the electronic product 10 is registered to the terminal 10 and while the wireless communication unit 110 of the electronic product 10 operates in the security AP mode, the terminal 20 may access the first SSID of the wireless communication unit 110 by using the first SSID and the password stored in the product information storage unit 250.

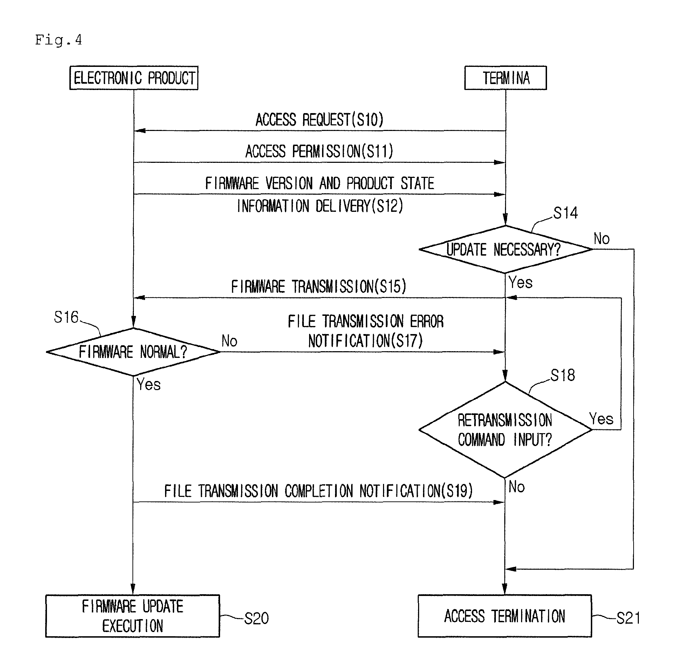

Fig. 4 is a flowchart illustrating a method of updating the firmware of an electronic product according to an embodiment of the present invention.

Referring to Figs. 3 and 4, by executing an application of the terminal 20, the terminal 20 requests an access from the electronic product 10 in operation S10. As mentioned above, while the wireless communication unit 110 of the electronic product 10 operates in the security AP mode, the terminal 20 may access the first SSID of the wireless communication unit 110 by using the first SSID and the password stored in the product information storage unit 250.

Then, the electronic product 10 permits an access of the terminal 20 in operation S11.

Then, the electronic product 10 transmits the current firmware version stored in the firmware storage unit 130 and the current state information on the electronic product 10 determined by the product state determination unit 120 to the terminal 20 in operation S12.

The update need determination unit 220 of the terminal 20 determines whether the firmware update of the electronic product 10 is necessary and the update is available at this point on the basis of the received firmware version and state information of the electronic product 10 in operation S14.

When the firmware update of the electronic product 10 is necessary, this means that the firmware version stored in the firmware update storage unit 230 of the terminal 20 is newer than the firmware version received from the electronic product 10.

When the firmware update is available in the electronic product 10, for example, the electronic product 10 is not in operation and the amount of charge in the battery is greater than a reference amount while the battery is charged. In this embodiment, the reference amount may be 50 % but is not limited thereto.

Or, while the battery of the electronic product 10 is not charged, if the amount of charge in the battery is greater than a reference amount, firmware update may be possible.

In the case that the electronic product 10 is a product driven at all times, for example, a refrigerator or a water purifier, when the firmware update of the electronic product 10 is available, this means that power is supplied to the electronic product 10.

Additionally, in the case that the electronic product 10 is a product driven intermittently, for example, a washing machine or a dishwasher, when the firmware update of the electronic product 10 is available, this means that the electronic product 10 is not in operation.

When the update need determination unit 220 determines that the firmware update of the electronic product 10 is necessary and update is available at this point, the user interface unit 270 of the terminal 20 may display a screen for receiving a command for executing the update.

A user may input an update execution command on a screen displayed on the user interface unit 270. In this case, the terminal 20 transmits a firmware update file to the electronic product 10 in operation S15.

As another example, without receiving a command for update execution from the user interface unit 270, the terminal 20 may automatically transmit a firmware update file to the electronic product 10.

At this point, the firmware modulation unit 260 of the terminal 20 generates an encryption file by using an MD5 algorithm from the firmware update file. Then, the terminal 20 transmits the firmware update file and the encryption file to the electronic product 10.

The electronic product 10 stores the received firmware file and encryption file in the firmware storage unit 130 and determines whether the received firmware file is normal in operation S16.

The firmware modulation and conformation unit 150 of the electronic product 10 generates an encryption file by using the received firmware update file through the MD5 algorithm and determines whether the received encryption file is identical to the generated encryption file.

Then, when the received encryption file is identical to the generated encryption, the firmware modulation and conformation unit 150 determines that the firmware update file received from the terminal 20 is normal.

When the firmware update file received from the terminal 20 is not normal, the electronic product 10 transmits a file transmission completion message to the terminal in operation S19. Then, the terminal 20 terminates the communication connection with the electronic product 21 in operation S21.

Then, the update execution unit 140 of the electronic product 10 executes the firmware update in operation S20.

On the other hand, when the received encryption file is not identical to the generated encryption file, the electronic product 10 transmits a file transmission error message to the terminal in operation S17. Then, the firmware update file stored in the firmware storage unit 130 is deleted.

When the terminal 20 receives the file transmission error message, the user interface unit 270 may display a screen for file retransmission command input. A user inputs a file retransmission command on a screen of the user interface unit 270 in operation S18 and the terminal 20 retransmits a firmware update file to the electronic product 10. Or, the terminal 20 may retransmit the firmware update file automatically without receiving a file retransmission command.

According to a suggested embodiment of the present invention, even when an additional wireless router is not installed in a place including an electronic product, since a wireless communication unit of the electronic product serves as a wireless router, a terminal and the electronic product communicate directly with each other. Therefore, the cost to purchase a wireless router may be reduced.

Additionally, by executing an application of the terminal and pressing a registration button equipped at the electronic product, the electronic product is registered to the terminal, so that a registration process of the electronic product becomes simple and user's convenience is improved.

Additionally, since the electronic product receiving a firmware update file determines whether the file is normal, it is prevented that although a firmware update file is received, firmware update is not performed due to an abnormal file.

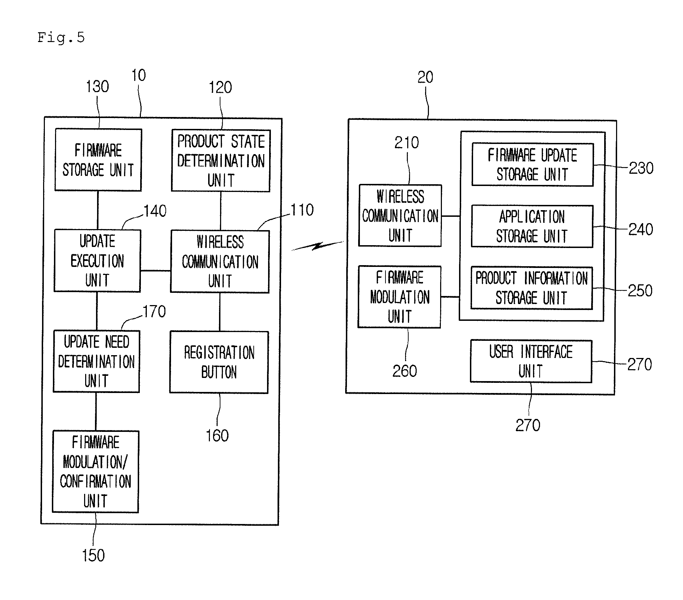

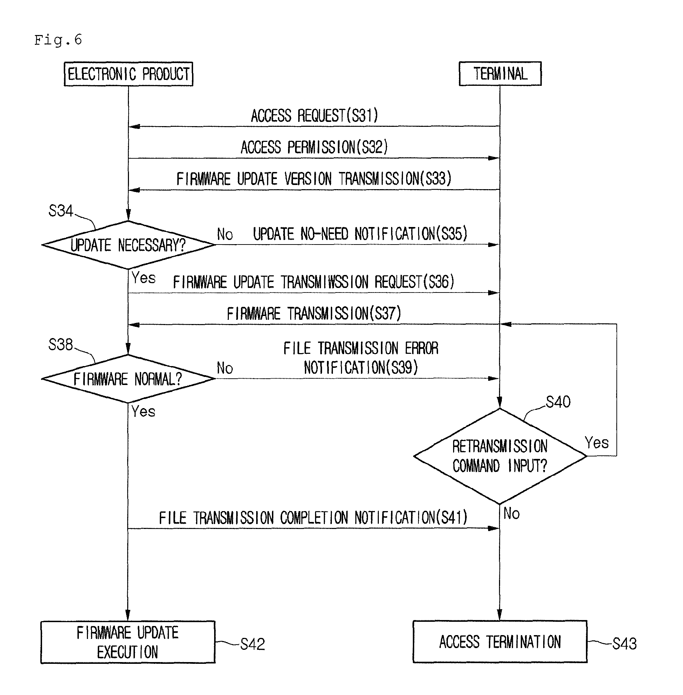

Fig. 5 is a block diagram of an electronic product and a terminal configuring a network device according to another embodiment of the present invention. Fig. 6 is a flowchart illustrating a firmware update method of an electronic product according to another embodiment of the present invention.

Referring to Fig. 5, the electronic product 10 may further include an update need determination unit 170 in addition to a wireless communication unit 110, a product state determination unit 120, a firmware storage unit 130, an update execution unit 140, a firmware modulation and confirmation unit 150, and a registration button 160. That is, unlike a previous embodiment, the terminal 20 may not determine whether firmware update is necessary and available but the electronic product 10 may determine whether firmware update is necessary and available.

Referring to Fig. 6, by executing an application of the terminal 20, the terminal 20 requests an access from the electronic product 10 in operation S31. As mentioned above, while the wireless communication unit 110 of the electronic product 10 operates in the security AP mode, the terminal 20 may access the first SSID of the wireless communication unit 110 by using the first SSID and the password stored in the product information storage unit 250.

Then, the electronic product 10 permits an access of the terminal 20 in operation S32.

Then, the terminal 20 transmits the firmware update version stored in the firmware update storage unit 230 to the electronic product 10 in operation S33.

The update need determination unit 220 of the electronic product 10 determines whether the firmware update is necessary and available at this point on the basis of the received firmware update version and state information determined by the product state determination unit 120 in operation S34. Since a method of determining whether update is necessary and available is identical to the above method in the previous embodiment, its detailed description is omitted.

When the update need determination unit 170 determines that the firmware update is unnecessary at this point, the electronic product 10 transmits an update no need message to the terminal 20 in operation S35.

On the other hand, when the update need determination unit 170 determines that the firmware update is available at this point, the electronic product 10 requests a firmware update transmission from the terminal 20 in operation S36. Then, the terminal 20 transmits a firmware update file to the electronic product 10 in operation S37.

At this point, the firmware modulation unit 260 of the terminal 20 generates an encryption file by using the MD5 algorithm from the firmware update file. Then, the terminal 20 transmits the firmware update file and the encryption file to the electronic product 10.

The electronic product 10 stores the received firmware file and encryption file in the firmware storage unit 130 and determines whether the received firmware file is normal in operation S38.

The firmware modulation and conformation unit 150 of the electronic product 10 generates an encryption file by using the received firmware update file through the MD5 algorithm and determines whether the received encryption file is identical to the generated encryption file. Then, when the received encryption file is identical to the generated encryption, the firmware modulation and conformation unit 150 determines that the firmware update file received from the terminal 10 is normal.

When the firmware update file received from the terminal 20 is not normal, the electronic product 10 transmits a file transmission completion message to the terminal in operation S41. Then, the terminal 20 terminates the communication connection with the electronic product 21 in operation S43.

Then, the update execution unit 140 of the electronic product 10 executes the firmware update in operation S42.

On the other hand, when the received encryption file is not identical to the generated encryption file, the electronic product 10 transmits a file transmission error message to the terminal in operation S39. Then, the firmware update file stored in the firmware storage unit 130 is deleted.

When the terminal 20 receives the file transmission error message, the user interface unit 270 may display a screen for file retransmission command input. A user inputs a file retransmission command on a screen of the user interface unit 270 in operation S40 and the terminal 20 retransmits a firmware update file to the electronic product 10. Or, the terminal 20 may retransmit the firmware update file automatically without receiving a file retransmission command.

In the above embodiments, it is described that by changing a mode of a wireless communication unit through a registration button equipped at an electronic product, the registration of the electronic product is performed. Unlike this, a near field communication (NFC) tag is equipped at the electronic product and by tagging the terminal to the NFC tag, it is possible to perform the registration of the electronic product.

That is, the NFC tag may store unique information on a product, MAC address, and the password of a first SSID, and when the terminal is tagged to the NFC tag, may transmit information for registration stored in the NFC tag to the terminal. Then, the terminal receiving the information for registration may access the first SSID of the electronic product.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An electronic product (10) comprising:
a wireless communication unit (110) for communicating with a terminal (20);
a firmware storage unit (130) configured to store a firmware file for update, the firmware file being received from the terminal;
a firmware modulation and confirmation unit (150) to determine whether the firmware file for update received from the terminal is normal; and
a firmware update execution unit (140) configured to execute update of the firmware received from the terminal,
wherein the electronic product (10) is configured, while it is registered to the terminal (20), to receive the firmware file for update from the terminal (20).

2. The electronic product according to claim 1, wherein the electronic product (10) is configured, when the firmware modulation and confirmation unit (150) determines that the firmware file for update is normal, to transmit a file transmission completion message to the terminal (20) and to have the firmware update execution unit (140) execute firmware update.

3. The electronic product according to claim 1 or 2, wherein the electronic product (10) is configured, when the firmware modulation and confirmation unit (150) determines that the firmware file for update is not normal, to delete the firmware file for update stored in the firmware storage unit (130) and to transmit a file transmission error message to the terminal (20).

4. The electronic product according to any of preceding claims,
wherein the electronic product (10) is configured, while receiving the firmware file for update, to receive from the terminal (20) a first encryption file generated from the firmware file for update; and
wherein the firmware modulation and confirmation unit (150) is configured to generate a second encryption file from the firmware file for update and to compare the first encryption file and the second encryption file to determine whether the received firmware file for update is normal.

5. The electronic product according to any of preceding claims, wherein the electronic product (10) is configured, when connected to the terminal (20) through communication, to transmit a current firmware version to the terminal (20) and to receive from the terminal (20) a firmware file for update of a newer version than the current firmware version.

6. The electronic product according to any of preceding claims, wherein the electronic product (10) is configured, when connected to the terminal (20) through communication, to transmit a current operation state thereof to the terminal (20); and
wherein the electronic product (10) is configured to receive the firmware file for update from the terminal (20) when it is in an operation stop state.

7. The electronic product according to any of claims 1 to 4, further comprising an update need determination unit (170) for determining whether firmware update of the electronic product is necessary,
wherein the electronic product (10) is configured, when connected to the terminal (20) through communication, to receive a version of the firmware for update from the terminal (20); and
wherein the update need determination unit (170) is configured to compare the version of the firmware for update received from the terminal (20) and a current firmware version stored in the firmware storage unit (130) to determine whether update is necessary.

8. The electronic product according to claim 7, further comprising a product state determination unit (120) for determining current state information of the electronic product (10), wherein the update need determination unit (170) is configured to determine whether the firmware update is available on the basis of the information determined by the product state determination unit (120).

9. The electronic product according to claim 8, wherein the update need determination unit (170) is configured, when the electronic product (10) is in an operation stop state, to determine that the firmware update is available.

10. The electronic product according to claim 8 or 9, wherein the electronic product is configured, when the update need determination unit (170) determines that the firmware update is necessary and available, to request transmission of the firmware for update from the terminal (20).

11. The electronic device according to any of preceding claims, wherein the wireless communication unit (110) is configured to operate in a security mode or a registration AP mode.

12. The electronic product according to claim 11, further comprising a registration button (160) for changing the mode of the wireless communication unit (110) from the security AP mode to the registration AP mode so as to establish communication connection with the terminal (20).

13. The electronic product according to claim 11 or 12, wherein the electronic product is configured, when the wireless communication unit (110) is switched to the registration AP mode, to connect to the terminal (20) through the wireless communication unit (110) and to transmit information for registration of the electronic product (10) to the terminal (20).

14. The electronic product according to claim 13, wherein the information for registration comprises a serial number of the electronic product (10), MAC address, and a password of a first SSID.
